# FASCICULE DE BREVET EUROPEEN

(11) **EP 2 105 378 B1**
(45) Date de publication et mention de la délivrance du brevet: **16.05.2012**
(21) Numéro de dépôt: 09003748.2
(22) Date de dépôt: 16.03.2009
(51) Int. Cl.: B64C 27/26

(54) **Hélicoptère hybride rapide à grande distance franchissable**
Schneller Hybridhubschrauber für Langstrecke
Fast hybrid helicopter with large range

(30) Priorité: 25.03.2008 FR 0801613
(43) Date de publication de la demande: 30.09.2009
(73) Titulaire: EUROCOPTER, 13725 Marignane Cédex (FR)
(72) Inventeur: Ferrier, Jean-Jacques, 13880 Velaux (FR)
(74) Mandataire: GPI & Associés

(56) Documents cités:
- WO-A-2007/014531
- DE-U1- 20 303 024
- US-A- 3 385 537
- US-A- 3 426 982
- US-A- 3 540 680
- US-B1- 6 471 158

## Description

La présente invention concerne un giravion à grande distance franchissable et à vitesse d'avancement élevée en vol de croisière.

Plus particulièrement, l'invention se rapporte à un hélicoptère hybride relatif à un concept avancé d'aéronef à décollage et à atterrissage verticaux, désigné « VTOL Aircraft » ou « Vertical Take-Off and Landing Aircraft » en langue Anglaise. Compte tenu de la spécificité du sujet, le domaine technique de l'invention est restreint aux giravions à décollage et à atterrissage verticaux munis d'un rotor principal de sustentation faisant notamment office de voilure tournante, le domaine technique n'englobant par exemple pas les avions, fussent-ils à décollage et à atterrissage verticaux ou non.

En effet, les contraintes aérodynamiques et problèmes à résoudre par exemple sur les aéronefs à voilure tournante diffèrent sensiblement des contraintes et problèmes rencontrés sur les aéronefs à voilure fixe ce qui explique leur exclusion du domaine technique de l'invention.

Ce concept avancé d'hélicoptère hybride allie à un coût raisonnable l'efficacité du vol vertical de l'hélicoptère conventionnel aux performances à grande vitesse de déplacement permises par l'utilisation d'hélices propulsives et l'installation de turbomoteurs modernes.

Afin de bien comprendre l'objectif de l'invention, Il convient de rappeler que les principaux matériels volants correspondent aux avions et aux giravions.

On désigne sous le nom de giravion tout appareil dont la sustentation est assurée totalement ou partiellement par une (ou plusieurs) hélice(s) d'axe sensiblement vertical, de grand diamètre, appelé rotor ou encore voilure tournante.

On distingue dans la catégorie des giravions plusieurs types distincts.

Tout d'abord, l'hélicoptère dont au moins un rotor principal, entraîné par une motorisation appropriée, assure à la fois la sustentation et la propulsion. L'hélicoptère est capable de vol stationnaire en restant en un point fixe de l'espace, peut décoller et atterrir verticalement et peut se déplacer dans n'importe quelle direction (avant-arrière-côtés-haut-bas). L'hélicoptère constitue la grande majorité des giravions produits dans le monde.

Ensuite, l'autogire est un giravion dont le rotor ne reçoit pas de puissance, mais assure la sustentation en tournant en autorotation sous l'effet de la vitesse d'avancement de l'appareil. La propulsion est assurée par un turbomoteur ou encore par une hélice, d'axe sensiblement horizontal en vol d'avancement, entraînée par un moteur classique. Cette formule n'est pas susceptible de vol vertical, sauf si le rotor est initialement lancé par un dispositif annexe permettant une mise en survitesse de ce rotor : un autogire ne peut donc pas faire de vol immobile mais seulement monter ou descendre sous des pentes de trajectoire très élevées. En quelque sorte, c'est un avion à grands écarts de vitesse qui ignore le décrochage et peut utiliser des terrains courts.

Le girodyne est un giravion intermédiaire entre l'hélicoptère et l'autogire dont le rotor n'assure que la sustentation. Ce rotor est normalement entraîné par une installation motrice pour les phases de décollage, vol stationnaire ou vertical et atterrissage, à l'instar de l'hélicoptère. Un girodyne comporte aussi un système de propulsion additionnel essentiellement différent de l'ensemble rotor. En vol d'avancement, le rotor assure encore la sustentation, mais uniquement en mode autorotation, c'est-à-dire sans transmission de puissance au dit rotor. Le Jet girodyne de la Société Fairey est une réalisation relative à ce concept.

Plusieurs autres formules nouvelles ont fait l'objet d'études plus ou moins poussées dont certaines ont parfois donné lieu à des réalisations pratiques.

A ce titre, on peut citer le combiné qui décolle et atterrit comme un hélicoptère, et vole en croisière comme un autogire : son rotor, animé d'un mouvement d'autorotation grâce à la vitesse d'avancement de l'appareil, assure une partie de la portance, l'autre partie étant assurée par une aile auxiliaire. Une hélice tractrice d'axe sensiblement horizontal crée l'effort nécessaire au mouvement de translation. Comme exemple, on peut citer le combiné expérimental SO 1310 Farfadet dont le rotor est propulsé par réaction en configuration décollage-atterrissage et tourne en autorotation en configuration croisière, la propulsion étant alors assurée par une hélice. L'appareil est muni de deux turbines séparées pour actionner le rotor et l'hélice.

De même, on connaît par le document US-6,513,752 un aéronef comprenant :
- un fuselage et une aile,
- deux hélices à pas variable,
- un rotor avec des masses « aux extrémités » (sic.).
- une source de puissance entraînant les deux hélices et le rotor,
- un moyen de contrôle pour ajuster le pas des hélices de sorte que :
   - en vol d'avancement, la poussée des hélices est exercée vers l'avant de l'aéronef,
   - en vol stationnaire, la fonction anticouple est réalisée par la poussée d'une hélice vers l'avant et celle de l'autre vers l'arrière de l'aéronef et le rotor est entraîné par la source de puissance.
- la source de puissance comprend un moteur et un embrayage, qui par déconnection du rotor par rapport au moteur permet au rotor de tourner plus vite qu'une sortie dudit moteur, en raison des masses précitées.

En complément, il est précisé que l'embrayage autorise le mode autogire en vol d'avancement. Par conséquent, l'aéronef selon ce document US-6,513,752 est du type combiné.

• De plus, une boite de transmission de puissance disposée entre la source de puissance et les hélices permet auxdites hélices de fonctionner à plusieurs vitesses de rotation par rapport à la vitesse d'une sortie de ladite source de puissance.

Le convertible constitue une autre formule particulière de giravion. Cette désignation englobe tous les giravions qui changent de configuration au cours du vol : décollage et atterrissage en configuration hélicoptère, vol de croisière en configuration avion, deux rotors étant par exemple basculés de 90 degrés environ pour servir d'hélices. La formule des rotors basculants a donné lieu à la réalisation de l'appareil Bell Boeing V22 Osprey, par exemple.

De ces différentes formules de giravions, l'hélicoptère est la plus simple de sorte qu'elle s'est imposée malgré le fait que la vitesse maximale de translation de l'hélicoptère de l'ordre de 300 km/h est faible et inférieure à celle envisageable par les formules de type combiné ou convertible, techniquement plus complexes et plus onéreuses.

On connaît une autre formule novatrice dénommée « hélicoptère hybride » par commodité.

Cet hélicoptère hybride comprend un fuselage à l'avant duquel est prévu le poste de pilotage, un rotor principal destiné à entraîner en rotation des pales grâce à au moins un turbomoteur, avantageusement deux turbomoteurs disposés sur le dessus du fuselage, de part et d'autre par rapport au plan de symétrie longitudinal de l'appareil.

De plus, l'hélicoptère hybride est pourvu d'une aile composée de deux demi-ailes à flèche nulle agencée de part et d'autre du fuselage. Deux hélices propulsives sont aussi placées de part et d'autre du fuselage, sur les demi-ailes.

Par ailleurs, l'hélicoptère hybride est muni d'une poutre de queue comportant à son extrémité des surfaces de stabilisation et de manoeuvre à savoir pour la profondeur, un empennage horizontal avec deux gouvernes de profondeur mobiles par rapport à la partie avant et pour la direction deux empennages appropriés, par exemple sensiblement verticaux, chacun de chaque côté de l'empennage horizontal.

En l'occurrence, l'empennage horizontal et les empennages verticaux forment un U renversé vers le fuselage.

De plus, l'hélicoptère hybride est équipé d'une chaîne cinématique intégrée, qui, outre les deux turbomoteurs, le rotor et les deux hélices, comprend un système mécanique d'interconnexion entre ces éléments.

Avec cette configuration, cet hélicoptère hybride est remarquable en ce que les vitesses de rotation des sorties des turbomoteurs, des hélices, du rotor et du système mécanique d'interconnexion sont proportionnelles entre elles, le rapport de proportionnalité étant constant quelle que soit la configuration de vol de l'hélicoptère hybride en conditions normales de fonctionnement de la chaîne cinématique intégrée.

Par conséquent et de façon avantageuse, le rotor demeure toujours entraîné en rotation par le (ou les) turbomoteur(s), et développe toujours une portance quelle que soit la configuration de l'hélicoptère hybride, aussi bien en vol d'avancement qu'en vol stationnaire. L'hélicoptère hybride n'est donc ni un autogire, ni un girodyne, ni un combiné mais un nouveau type de giravion.

Plus précisément, le rotor est destiné à assurer la totalité de la portance de l'hélicoptère hybride pendant les phases de décollage, d'atterrissage et de vol vertical puis partiellement pendant le vol de croisière, l'aile contribuant alors pour partie à supporter ledit hélicoptère hybride.

Ainsi, le rotor exerce la plus grande part de la sustentation de l'hélicoptère hybride en vol de croisière avec éventuellement une faible contribution aux forces propulsives ou traction et toujours avec une traînée minimale.

Les fonctions anticouple et de contrôle de direction sont réalisées par utilisation d'une poussée différentielle exercée par les hélices. En vol vertical, l'hélice à gauche du fuselage exerce une poussée vers l'arrière de l'hélicoptère hybride tandis que l'hélice à droite produit une poussée vers l'avant, dans l'hypothèse où le rotor tourne dans le sens horaire.

Cet hélicoptère hybride permet non seulement des missions se déroulant pendant des temps prolongés en vol vertical, des vols de croisière à une vitesse élevée mais aussi permet de parcourir de longues distances franchissables, tout en autorisant des vols stationnaires et des décollages verticaux.

Néanmoins, les hélices sont proches du fuselage ce qui est à l'origine de nuisances sonores pour les passagers de l'hélicoptère hybride.

De plus, la poutre de queue peut être à l'origine de vibrations de par l'effet dénommé « tail shake » par l'homme du métier en langue anglaise. Il est à noter que ce phénomène de « tall shake » est exclusif au giravion.

En pratique, le rotor principal se comporte comme un excitateur aérodynamique. Ainsi, le sillage est de nature turbulente. On rappelle que la turbulence correspond à des variations de pression, de vitesse et d'incidence du flux aérodynamique réparties sur une gamme assez large de fréquences relativement élevées.

Le sillage en arrière du rotor principal de l'hélicoptère hybride est pulsé à la fréquence fondamentale égale au produit b x Ω où b est le nombre de pales du rotor principal et Ω la vitesse de rotation de ce rotor.

Cependant, des fréquences qui sont des harmoniques de b × Ω peuvent éventuellement apparaître.

Dans ces conditions, les empennages sont soumis simultanément à une telle excitation aérodynamique ce qui conduit directement à l'excitation des modes propres de la structure de l'hélicoptère.

On note de plus que les gaz sortant des turbomoteurs, échauffent les ensembles structuraux arrière, comprenant la poutre de queue et les empennages, ce qui peut créer des problèmes de tenue des matériaux constituant ces ensembles structuraux arrière.

Les vibrations résultant du « tail shake » peuvent aussi être des sources d'inconfort pour les passagers. Le phénomène de « tail shake » est alors combattu à l'aide par exemple de dispositifs actifs agissant sur les empennages ou encore la poutre de queue.

Cependant, un autre type d'hélicoptère hybride est connu du document US 3,385,537 qui décrit toutes les caractéristiques du préambule de la revendication 1.

La présente invention a pour objet de proposer un giravion, et tout particulièrement un hélicoptère hybride permettant de s'affranchir de la limitation mentionnée précédemment en augmentant considérablement le confort des passagers par rapport à la formule existante.

De préférence, cet hélicoptère hybride doit être capable d'effectuer des missions efficacement pendant des temps prolongés en vol vertical et d'assurer des vols de croisière à une vitesse élevée mais aussi de permettre de parcourir de longues distances franchissables, en assurant un confort acceptable pour ses passagers.

Selon l'invention, un hélicoptère hybride comporte un fuselage central muni d'une extrémité avant et d'une extrémité arrière, cet hélicoptère hybride comprenant :
- un rotor principal de sustentation, muni d'une pluralité de pales, agencé au dessus du fuselage,
- une surface sustentatrice d'appoint munie d'une première et d'une deuxième demi-ailes s'étendant de part et d'autre du fuselage d'une zone d'emplanture à une zone extrémale, chaque demi-aile étant pourvue d'une hélice,
- un système mécanique d'interconnexion entre le rotor principal et les hélices,
- au moins un turbomoteur pour entraîner en permanence en rotation le rotor principal et les hélices en engrenant le système mécanique.

L'aéronef revendiqué est donc bien un hélicoptère hybride, et non pas un autogire, un girodyne ou un convertible, dans la mesure où le rotor principal est en permanence entraîné en rotation par le ou les turbomoteurs.

Cet hélicoptère hybride est remarquable en ce que, le rotor principal étant relié mécaniquement au système mécanique d'interconnexion par un mât rotor tournant, la surface sustentatrice d'appoint est agencée à l'arrière de l'hélicoptère hybride, c'est à dire entre le mât rotor et l'extrémité arrière du fuselage. De plus, l'hélicoptère hybride est muni d'une surface stabilisatrice agencée au niveau de l'extrémité avant du fuselage.

Par suite, les hélices agencées sur les demi-ailes ne sont plus à proximité des passagers de l'hélicoptère hybride et n'altèrent plus leur confort.

En outre, classiquement les hélices participent à la propulsion de l'hélicoptère hybride de manière à lui octroyer une grande vitesse d'avancement.

De plus, l'hélicoptère hybride selon l'Invention est totalement dépourvu de poutre de queue et d'empennages structuraux arrière.

En effet, en ajustant la différence de poussée des hélices, le pilote peut contrecarrer le couple exercé par le rotor principal et contrôler ainsi le lacet de cet hélicoptère hybride, de la même façon qu'il le ferait avec un rotor anticouple.

En outre, les hélices sont régulées de manière à stabiliser l'hélicoptère hybride en lacet, de façon à compenser l'absence d'empennage vertical.

Enfin, la surface stabilisatrice remplace avantageusement les empennages horizontaux classiques en constituant une surface portante supplémentaire permettant de stabiliser l'hélicoptère et d'améliorer le confort de ses occupants.

Ainsi, l'absence radicale d'une poutre de queue permet d'améliorer le confort des passagers puisque l'hélicoptère hybride ne subira pas l'effet redouté du « tail shake », effet combattu jusqu'alors par des dispositifs actifs couteux et lourds.

La combinaison, et non pas la simple juxtaposition, de demi-ailes et d'une surface stabilisatrice agencée à l'avant de l'hélicoptère hybride est totalement nouvelle et inventive dans le domaine des hélicoptères pour améliorer le confort des passagers, plus particulièrement dans le domaine des hélicoptères hybrides, la suppression de la poutre de queue étant par essence impensable.

On note de plus que cette combinaison présente de multiples avantages supplémentaires, tels que l'amélioration de la sécurité. Les hélices propulsives de l'hélicoptère hybride n'étant plus en vis-à-vis de la cabine des passagers ou du poste de pilotage, la sécurité s'en trouve accrue.

De plus, en déplaçant fortement les ailes vers l'extrémité arrière du fuselage, on dégage les parois latérales de ce fuselage, ce qui permet par exemple l'installation d'équipements optionnels tels qu'un treuil par exemple.

Par ailleurs, la surface stabilisatrice crée de la portance « gratuite » ce qui permet d'augmenter la charge payante de l'hélicoptère hybride par rapport à un appareil classique.

En outre, la surface stabilisatrice permet de régler le centre de portance de l'ensemble demi-ailes/ surface stabilisatrice ce qui revêt un avantage d'autant plus important du fait de la position très reculée des demi-ailes. Ainsi, le centre de portance de l'ensemble demi-ailes/surface stabilisatrice est confondu avec le centre de portance du rotor principal. Ainsi, une accélération de l'hélicoptère hybride ne risque pas de le faire piquer du fait de l'augmentation de la portance des demi-ailes en résultant.

De plus, la surface stabilisatrice comporte un ou plusieurs éléments stabilisateurs.

Ainsi, la surface stabilisatrice peut être munie d'un unique élément stabilisateur s'étendant de part et d'autre du fuselage.

Toutefois, il peut être intéressant que la surface stabilisatrice soit pourvue d'un premier et d'un deuxième éléments stabilisateurs s'étendant de part et d'autre du fuselage à son extrémité avant pour faciliter son agencement, les premier et deuxième éléments stabilisateurs s'étendant chacun d'un unique côté du fuselage.

La surface stabilisatrice est alors éventuellement pourvue d'au moins un volet horizontal, un volet par élément stabilisateur par exemple.

Avantageusement, la surface stabilisatrice étant contenue dans un premier plan, la surface sustentatrice d'appoint étant contenue dans un deuxième plan, le premier plan présente une troisième angulation par rapport au deuxième plan de manière à ce que la surface stabilisatrice possède une incidence plus élevée que la surface sustentatrice d'appoint par rapport au vent relatif.

Par suite, la surface sustentatrice d'appoint de l'hélicoptère hybride ne risque pas de décrocher ce qui pourrait conduire à une situation catastrophique.

En effet, dans le cas où les demi-ailes de la surface sustentatrice d'appoint se trouvent en configuration de forte incidence, par exemple si l'hélicoptère hybride cabre fortement en vol de montée, la surface stabilisatrice aura une incidence légèrement plus grande en raison de son calage initial.

Si tel est le cas, le ou les éléments stabilisateurs décrocheront avant que les demi-ailes de la surface sustentatrice d'appoint ne puissent décrocher à leur tour. Le décrochage des éléments stabilisateurs aura pour effet direct de ramener l'hélicoptère hybride, et donc les demi-ailes de la surface sustentatrice d'appoint dans une configuration de moindre incidence, écartant ainsi le risque de décrochage de ces demi-ailes. On constate donc que les éléments stabilisateurs ont un effet stabilisant naturel.

Enfin, la surface stabilisatrice, et donc ce ou ces éléments stabilisateurs, est préférentiellement agencée hors du flux traversant le rotor principal, une première distance minimale séparant ladite surface stabilisatrice du mât rotor étant supérieure ou égale à la longueur des pales.

Cette caractéristique s'avère très ingénieuse et stabilisatrice pour l'hélicoptère hybride en évitant un phénomène dénommé « bosse d'assiette » par l'homme du métier.

Sur un hélicoptère traditionnel, hybride ou non, volant en translation, l'air traversant le rotor principal est défléchi vers l'arrière et vient impacter l'empennage associé à la poutre de queue. Cet air traversant exerce des efforts sur cet empennage que le pilote compense en manoeuvrant ses commandes.

Toutefois, lorsque les conditions de vol varient, la déflection de l'air traversant est aussi modifiée. Il en va donc de même des efforts exercés sur l'empennage.

En phase d'accélération, la bosse d'assiette tend à faire cabrer l'hélicoptère. Pour conserver sa vitesse, le pilote pousse alors sur son manche de commande cyclique pour diminuer le cabrage.

A contrario, en décélération, a bosse d'assiette tend à faire piquer l'hélicoptère. Pour ne pas accélérer, le pilote tire alors sur son manche de commande cyclique,

En agençant donc la surface stabilisatrice hors du flux du rotor principal, on ne risque pas de voir apparaître le phénomène de « bosse d'assiette ».

La présente invention peut aussi présenter une ou plusieurs des caractéristiques additionnelles qui suivent.

Chaque demi-aile de la surface sustentatrice d'appoint peut être pourvue d'un élément vertical au bout de sa zone extrémale, à savoir du coté de la demi-aile opposée au fuselage. De tels éléments verticaux sont dénommés « winglet » par l'homme du métier en langue anglaise.

Ces éléments verticaux bloquent la circulation d'air et réduisent donc le tourbillon marginal de nature turbulente, De ce fait, les éléments verticaux améliorent le niveau vibratoire de l'hélicoptère hybride et donc son confort.

De plus, ces éléments verticaux contribuent à la stabilisation de l'hélicoptère hybride en lacet, leur efficacité augmentant avec la vitesse de cet hélicoptère hybride.

En outre, il est envisageable d'équiper chaque élément vertical d'un volet de direction. Les volets de direction des éléments verticaux fournissent au pilote de l'hélicoptère hybride un moyen de contrôle du lacet.

Par suite, les éléments verticaux et les volets de direction associés participent à la stabilisation et au contrôle de l'hélicoptère hybride. Ces opérations ne sont donc plus entièrement dévolues aux hélices.

Par ailleurs, les éléments verticaux présentant avantageusement une première angulation obtuse avec la demi-aile correspondante, ces éléments verticaux forment éventuellement un dièdre négatif en étant dirigés vers le sol lorsque l'hélicoptère hybride est au sol, et peuvent accessoirement participer à l'optimisation du centrage de l'hélicoptère hybride.

Ainsi, les éléments verticaux améliorent le confort et la sécurité des personnes se déplaçant à proximité de l'hélicoptère hybride, le personnel de maintenance au sol par exemple. Il en est de même pour les passagers qui doivent passer à proximité des hélices en rotation lors de l'embarquement ou le débarquement.

En effet, les hélices représentent un danger permanent lors de leur rotation. Par suite, ledit personnel doit toujours faire attention de ne pas se trouver à proximité des hélices, La peur et l'attention en résultant constituent une réelle source d'inconfort pour ce personnel.

Or, les éléments verticaux réduisent considérablement les risques et l'inconfort qui en découlent puisqu'ils éloignent nécessairement ledit personnel. En formant un dièdre négatif, les éléments verticaux créent en fin de compte une sorte de barrière de sécurité.

En outre, afin d'éloigner au maximum les hélices du fuselage, les demi-ailes sont à flèche arrière de manière à présenter une deuxième angulation avec le fuselage et à être dirigées vers l'extrémité arrière du fuselage.

De même, les hélices sont avantageusement en mode propulsif et donc dirigées vers l'arrière de l'hélicoptère hybride, chaque hélice se trouvant du côté du bord de fuite de la demi-aile correspondante.

Le bruit généré par les hélices est alors fortement atténué, du point de vue des passagers de l'hélicoptère hybride tout au moins. Il devient inutile de prévoir des dispositifs actifs de limitation de bruit, le confort étant d'ores et déjà assuré.

De plus, même dans le cas improbable d'éclatement d'une hélice, au sol ou en vol, les occupants de l'hélicoptère hybride restent à l'abri du danger car les hélices sont situées en arrière de la cabine. Seuls des endommagements structuraux pourraient être à déplorer.

L'invention garantit ainsi un confort optimal pour les passagers mais aussi leur sécurité.

Pour augmenter l'effet positif de l'invention, chaque hélice est alors agencée au niveau de la zone extrémale de la demi-aile correspondante.

Par ailleurs, chaque élément vertical est muni d'un élément de soutien de l'hélicoptère hybride par rapport au sol, une béquille ou une roulette par exemple.

En effet, lors de l'atterrissage, les hélices peuvent toucher le sol si le cabrage de l'hélicoptère hybride est trop important. L'élément de soutien permet de limiter naturellement ce cabrage à une valeur limite afin que les hélices, voire même l'extrémité arrière du fuselage, ne puissent pas entrer en contact avec le sol, ce qui aurait pour conséquence d'entraîner l'éclatement de ces hélices et l'endommagement du fuselage.

De même, lors de configurations de roulis excessif au sol, les éléments de soutien limitent le roulis à une valeur maximale permettant d'éviter que les hélices ou les moyens verticaux entrent en contact avec le sol.

Plutôt que d'ajouter des protections inconfortables dans le fuselage visant à préserver l'intégrité physique des occupants de l'hélicoptère hybride en cas d'un cabrage trop important, on se contente ainsi de simples béquilles ou roulettes agencées au bout des éléments verticaux.

Avantageusement, cet élément de soutien présente aussi une capacité d'absorption de l'énergie d'impact permettant d'éviter, ou au moins de limiter, les endommagements structuraux lors de configurations de cabrage ou de roulis excessifs au sol.

Enfin, l'invention portant sur un hélicoptère hybride, les vitesses de rotation de sortie du au moins un turbomoteur, de la au moins une hélice, du rotor et du système mécanique d'interconnexion sont proportionnelles entre elles, le rapport de proportionnalité étant constant quelle que soit la configuration de vol de l'hélicoptère hybride en conditions normales de fonctionnement.

L'invention et ses avantages apparaîtront avec plus de détails dans le cadre de la description qui suit avec un exemple de réalisation donné à titre illustratif en référence aux figures annexées qui représentent :
- la figure 1, une vue de dessus de l'hélicoptère hybride selon l'invention,
- la figure 2, une vue de côté de l'hélicoptère hybride selon l'invention, et
- la figure 3, une vue schématique présentant la différence d'incidence entre la surface stabilisatrice et la surface sustentatrice d'appoint.

Les éléments présents dans plusieurs figures distinctes sont affectés d'une seule et même référence.

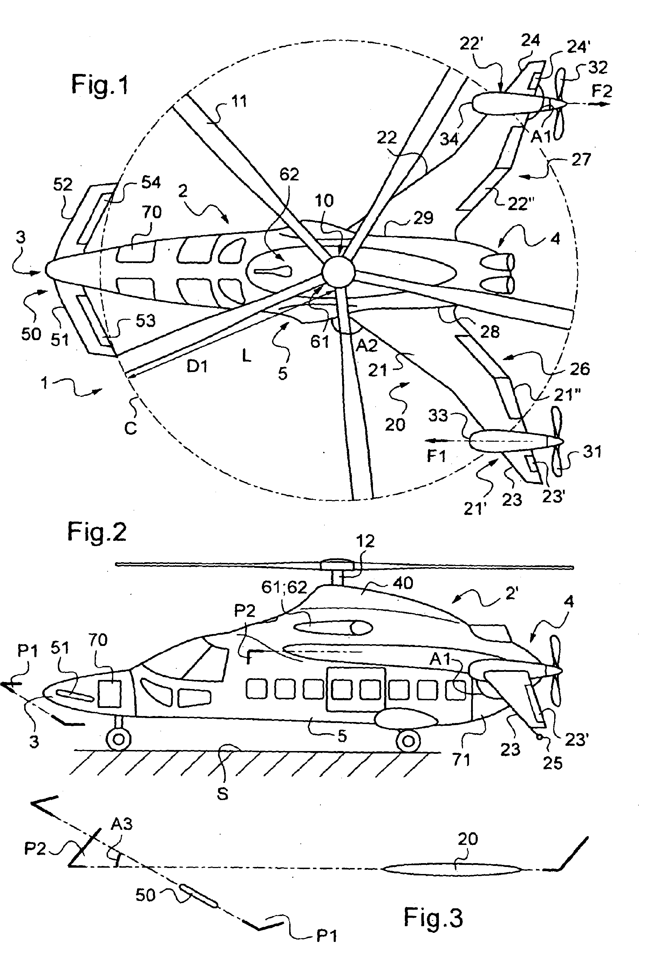

Les figures 1 et 2 présentent des vues de dessus et de côté d'un hélicoptère hybride 1 selon l'invention.

Cet hélicoptère hybride comporte un fuselage 2 central qui s'étend d'une extrémité avant 3 à une extrémité arrière 4. Une cabine 5, disposée entre ces extrémités avant 3 et arrière 4 du fuselage 2, est logée à l'intérieur du fuselage 2 pour accueillir les membres d'équipage de l'hélicoptère hybride 1 ainsi que les passagers.

De plus, l'hélicoptère hybride comporte un rotor principal 10 muni d'une pluralité de pales 11. Le mât rotor 12 de ce rotor principal 10 est alors entraîné par une installation motrice comportant un premier et un deuxième turbomoteurs 61, 62 via un système mécanique d'interconnexion 40.

On constate sur la figure 2 que les premier et deuxième turbomoteurs 61, 62 ainsi que le système mécanique d'interconnexion 40 sont agencés dans la partie supérieure 2' du fuselage 2, au dessus de la cabine 5.

De même, le rotor principal 10 est évidemment agencé au dessus de ce fuselage 2.

Par ailleurs, l'hélicoptère hybride 1 dispose d'une surface sustentatrice d'appoint 20 pourvue d'une première et d'une deuxième demi-ailes 21, 22 s'étendant de part et d'autre du fuselage 2.

Plus précisément, ces première et deuxième demi-ailes 21, 22 sont agencées à l'arrière du fuselage 2 entre le mât rotor 12 et l'extrémité arrière 4 du fuselage 2.

De plus, les première et deuxième demi-ailes 21, 22 de la surface sustentatrice d'appoint 20 s'étendent du fuselage 2 selon une direction présentant une deuxième angulation A2 avec le fuselage. Cette deuxième angulatlon permet aux première et deuxième demi-ailes 21, 22 de présenter une flèche arrière de telle sorte que les demi-ailes sont dirigées vers l'arrière de l'hélicoptère hybride 1, à savoir du côté de l'extrémité arrière 4 du fuselage 2.

Enfin, les première et deuxième demi-ailes 21, 22 sont en position haute, c'est-à-dire au dessus de la cabine 5 pour ne pas gêner la visibilité des passagers, et donc leur confort.

En outre, on note que les première et deuxième demi-ailes 21, 22 sont chacune pourvues successivement, du fuselage 2 vers leur extrémité libre, d'une zone d'emplanture 28, 29, d'une zone intermédiaire 26, 27 puis d'une zone extrémale 21', 22'.

La zone intermédiaire 26, 27 de chaque demi-aile 21, 22 est pourvue d'ailerons au niveau du bord de fuite 21", 22" desdites demi-ailes. Ces ailerons sont inclinables pour réduire la surface projetée au sol des première et deuxième demi-ailes 21, 22 en vol stationnaire ou à faible vitesse, de façon à réduire la perte de portance du rotor principal 10 induite par la perturbation du flux rotor par lesdites demi-ailes.

Chaque zone extrémale 21', 22' comporte une hélice 31, 32 puis un élément vertical 23, 24. La première zone extrémale 21' de la première demi-aile 21 possède donc une première hélice 31 alors que la deuxième zone extrémale 22' de la deuxième demi-elle 22 est munie d'une deuxième hélice 32.

Les première et deuxième hélices 31, 32 sont en mode propulsif et respectivement agencées du coté du bord de fuite 21", 22" de la première et de la deuxième demi-ailes 21, 22 correspondante afin d'être dirigées vers l'arrière de l'hélicoptère hybride 1.

Ces première et deuxième hélices 31, 32 sont alors entrainées par les turbomoteurs 61, 62 via le système mécanique d'interconnexion. En effet, les premier et deuxième turbomoteurs 61, 62 engrènent le système mécanique d'interconnexion 40 qui entraine d'une part en rotation le rotor principal 10 via le mât rotor 12 et, d'autre part, les première et deuxième hélices 31, 32 via des première et deuxième chaines de transmission mécanique.

Au niveau des hélices, ladite chaine de transmission correspondante est agencée dans des carénages 33, 34. On note que ces carénages couvrent aussi un dispositif permettant de faire varier le pas des pales des première et deuxième hélices 31, 32.

L'hélicoptère 1 étant un hélicoptère hybride, le rotor principal est en permanence mis en rotation par le système mécanique d'interconnexion 40. Les vitesses de rotation de sortie des premier et deuxième turbomoteurs 61, 62, des première et deuxième hélices 31, 32, du rotor principal 10 et dudit système mécanique d'interconnexion 40 sont proportionnelles entre elles, le rapport de proportionnalité étant constant quelle que soit la configuration de vol de l'hélicoptère hybride 1 en conditions normales de fonctionnement.

En vol d'avancement, les hélices exercent une poussée vers l'arrière de l'hélicoptère hybride 1 pour le propulser vers l'avant. A contrario, il est possible de faire un vol stationnaire, en Inversant la poussée d'une hélice. Par exemple, la première hélice 31 de la première demi-aile 21 exerce une poussée vers l'avant de l'hélicoptère hybride 1 conformément à la flèche F1, alors que la deuxième hélice 32 de la deuxième demi-aile 22 exerce une poussée vers l'arrière de l'hélicoptère hybride 1 conformément à la flèche F2.

Par ailleurs, chaque élément vertical 23, 24 des première et deuxième demi-ailes 21, 22 comporte avantageusement un volet de direction 23', 24' permettant de contrôler l'hélicoptère hybride 1 en lacet.

Ces éléments verticaux 23, 24 présentent une première angulation A1 avec la demi-aile 21, 22 correspondante et forment un dièdre négatif dirigé vers le sol S. Pour éviter d'endommager les hélices par un cabrage trop important au décollage ou à l'atterrissage de l'hélicoptère hybride, chaque élément vertical 23, 24 est pourvu d'un élément de soutien 25, une roulette par exemple. Les éléments de soutien 25 maintiennent ainsi le cabrage de l'hélicoptère hybride en dessous d'une valeur limite garantissant l'intégrité physique des hélices.

L'hélicoptère hybride 1 n'ayant pas de poutre de queue, et donc pas les empennages classiques d'un hélicoptère, cet hélicoptère hybride 1 est avantageusement muni d'une surface stabilisatrice 50 comportant un premier et un deuxième éléments stabilisateurs 51, 52 s'étendant de part et d'autre du fuselage 2 au niveau de son extrémité avant 3.

Ces premier et deuxième éléments stabilisateurs 51, 52 constituent une troisième surface portante, les première et deuxième surfaces portantes comprenant respectivement le rotor principal 10 et la surface sustentatrice d'appoint 20.

De plus, chaque élément sustentateur 51, 52 de la surface stabilisatrice 50 comporte un volet horizontal 53, 54 lui permettant de remplacer l'empennage horizontal classiquement agencé au bout de la poutre de queue d'un hélicoptère, hybride ou non.

Pour éviter que l'hélicoptère hybride décroche, le premier plan P1 contenant les premier et deuxième éléments sustentateurs 51, 52 de la surface stabilisatrice 50 présente un troisième angulation A3, représentée sur la figure 3, avec un deuxième plan P2 contenant les demi-ailes 21, 22 de la surface sustentatrice d'appoint 20.

Plus précisément, la troisième angulation A3 est telle que les premier et deuxième éléments sustentateurs 51, 52 présentent une incidence plus importante que les première et deuxième demi-ailes 21, 22 par rapport au vent relatif.

Enfin, vus de dessus, on constate sur la figure 1 que les premier et deuxième éléments sustentateurs 51, 52 sont agencés à la périphérie du cercle C décrit par les extrémités libres des pales 11 du rotor principal 10, à l'extérieur de ce cercle.

En effet, la première distance D1 minimale séparant chaque élément sustentateur 51, 52, et donc la surface stabilisatrice 50, du mât rotor 12 du rotor principal 10 est supérieure ou égale, en l'occurrence égale sur l'exemple schématisé, à la longueur L des pales 11 de ce rotor principal 10.

Ainsi, les premier et deuxième éléments sustentateurs 51, 52 se trouvent en dehors du flux d'air traversant le rotor principal 10. Les premier et deuxième éléments sustentateurs 51, 52 ne seront pas impactés par ce flux d'air et n'engendront pas un phénomène de « bosse d'assiette ».

L'éloignement de l'extrémité avant 3 du fuselage, par rapport à la cabine 5 présente aussi l'avantage de permettre de créer une soute principale 70 à l'avant de l'hélicoptère hybride 1. De même, la suppression de la poutre de queue permet de créer une soute secondaire 71 à l'extrémité arrière 4 du fuselage 2.

La soute principale 70 accueille avantageusement l'avionique de l'hélicoptère hybride, alors que la soute secondaire 71 autorise le logement de bagages en son sein de manière à libérer de l'espace dans la cabine 5 pour améliorer le confort des passagers.

Naturellement, la présente invention est sujette à de nombreuses variations quant à sa mise en oeuvre. Bien qu'un mode de réalisation ait été décrit, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Par exemple, les figures montrent un hélicoptère hybride muni d'une première et d'une deuxième hélices.

Pour lutter contre le couple généré par l'entrainement mécanique du rotor principal 10, une hélice exerce une poussée plus importante que l'autre en vol stationnaire. En vol d'avancement, les éléments verticaux peuvent suffire pour maintenir le lacet de l'hélicoptère hybride.

Cependant, dans une variante de l'invention non revendiquée, l'hélicoptère hybride comporte une unique hélice, disposée sur la première ou la deuxième demi-aile en fonction du sens de rotation du rotor principal.

## Revendications

1. Hélicoptère hybride (1) comportant un fuselage (2) central muni d'une extrémité avant (3) et d'une extrémité arrière (4), ledit hélicoptère hybride (1) comprenant :
- un rotor principal (10) de sustentation, muni d'une pluralité de pales (11), agencé au dessus dudit fuselage,
- une surface sustentatrice d'appoint (20) munie d'une première et d'une deuxième demi-ailes (21, 22) s'étendant de part et d'autre dudit fuselage (2) d'une zone d'emplanture (28, 29) à une zone extrémale (21', 22'), chaque demi-aile (21, 22) étant pourvue d'une hélice (31, 32),
- un système mécanique d'interconnexion (40) entre ledit rotor principal (10) et lesdites hélices (31, 32),
- au moins un turbomoteur (61, 62) pour entraîner en permanence en rotation ledit rotor principal (10) et lesdites hélices (31, 32) en engrenant ledit système mécanique,
et dont ledit rotor principal (10) est relié mécaniquement au système mécanique d'interconnexion (40) par un mât rotor (12) tournant **caractérisé en ce que**, ladite surface sustentatrice d'appoint (20) est agencée à l'arrière de l'hélicoptère hybride (1) entre ledit mât rotor (12) et ladite extrémité arrière (4) du fuselage (2) et que ledit hélicoptère hybride (1) est muni d'une surface stabilisatrice (50) agencée au niveau de l'extrémité avant (3) dudit fuselage (2).

2. Hélicoptère hybride selon la revendication 1,
**caractérisé en ce que** le centre de portance d'un ensemble demi-ailes (21, 22)/ surface stabilisatrice (50) est confondu avec le centre de portance dudit rotor principal (10).

3. Hélicoptère hybride selon l'une quelconque des revendications précédentes,
**caractérisé en ce que** ladite surface stabilisatrice (50) est pourvue d'un premier et d'un deuxième éléments stabilisateurs (51, 52) s'étendant de part et d'autre du fuselage (2) à son extrémité avant (3).

4. Hélicoptère hybride selon l'une quelconque des revendications précédentes,
**caractérisé en ce que** ladite surface stabilisatrice (50) comporte au moins un volet horizontal (53, 54).

5. Hélicoptère hybride selon l'une quelconque des revendications précédentes,
**caractérisé en ce que** ladite surface stabilisatrice (50) est agencée hors du flux traversant ledit rotor principal (10), une première distance (D1) séparant ladite surface stabilisatrice (50) dudit mât rotor (12) étant supérieure ou égale à la longueur (L) desdites pales (11).

6. Hélicoptère hybride selon l'une quelconque des revendications précédentes,
**caractérisé en ce que**, ladite surface stabilisatrice (50) étant contenue dans un premier plan (P1) et la surface sustentatrice d'appoint (20) étant contenue dans un deuxième plan (P2), ledit premier plan (P1) présente une troisième angulation (A3) par rapport audit deuxième plan (P2) de manière à ce que la surface stabilisatrice (50) possède une incidence plus élevée que la surface sustentatrice d'appoint (20) par rapport au vent relatif.

7. Hélicoptère hybride selon l'une quelconque des revendications précédentes,
**caractérisé en ce que** chaque zone extrémale (21', 22') desdites demi-ailes (21, 22) de la surface sustentatrice d'appoint (20) est munie d'un élément vertical (23, 24).

8. Hélicoptère hybride selon la revendication 7,
**caractérisé en ce que** chaque élément vertical (23, 24) est équipé d'un volet de direction (23', 24').

9. Hélicoptère hybride selon l'une quelconque des revendications 7 à 8,
**caractérisé en ce que** lesdits éléments verticaux (23, 24), présentant une première angulation (A1) obtuse avec la demi-aile (21, 22) correspondante, ces éléments verticaux (23, 24) forment un dièdre négatif en étant dirigés vers le sol (S) lorsque l'hélicoptère hybride (1) est au sol.

10. Hélicoptère hybride selon l'une quelconque des revendications précédentes,
**caractérisé en ce que** lesdites demi-ailes (21, 22) sont à flèche arrière de manière à présenter une deuxième angulation (A2) avec le fuselage (2) et à être dirigées vers l'extrémité arrière (4) du fuselage (2).

11. Hélicoptère hybride selon l'une quelconque des revendications précédentes,
**caractérisé en ce que**, lesdites hélices (31, 32) sont en mode propulsif, chaque hélice (31, 32) se trouvant du côté du bord de fuite (21 ", 22") de la demi-aile (21, 22) correspondante.

12. Hélicoptère hybride selon l'une quelconque des revendications précédentes,
**caractérisé en ce que** chaque hélice (31, 32) est agencée au niveau de la zone extrémale (21', 22') de la demi-aile (21, 22) correspondante.

13. Hélicoptère hybride selon l'une quelconque des revendications précédentes,
**caractérisé en ce que** chaque élément vertical (23, 24) est muni d'un élément de soutien (25) de l'hélicoptère hybride (1) par rapport au sol.

14. Hélicoptère hybride selon l'une quelconque des revendications précédentes,
**caractérisé en ce que**, les vitesses de rotation de sortie dudit au moins un turbomoteur (61, 62), d'au moins une desdites hélices (31, 32), dudit rotor principal (10) et dudit système mécanique d'interconnexion (40) sont proportionnelles entre elles, le rapport de proportionnalité étant constant quelle que soit la configuration de vol de l'hélicoptère hybride (1) en conditions normales de fonctionnement.

## Claims

1. Hybrid helicopter (1) containing a central fuselage (2) provided with a front end (3) and a rear end (4), said hybrid helicopter (1) comprising:
- a main lift rotor (10), provided with a plurality of blades (11), arranged above said fuselage;
- an additional lift surface (20) provided with a first and a second half-wing (21, 22) extending on either side of said fuselage (2) from a root zone (28, 29) to an end zone (21', 22'), each half-wing (21, 22) being provided with a propeller (31, 32);
- a mechanical interconnection system (40) between said main rotor (10) and said propellers (31, 32);
- at least one turbine engine (61, 62) for continuously driving said main rotor (10) and said propellers (31, 32) in rotation by meshing with said mechanical system;
and wherein said main rotor (10) is mechanically connected to the mechanical interconnection system (40) via a rotary rotor mast (12),
**characterised in that** said additional lift surface (20) is arranged at the rear of the hybrid helicopter (1) between said rotor mast (12) and said rear end (4) of the fuselage (2), and **in that** said hybrid helicopter (1) is provided with a stabiliser surface (50) arranged at the front end (3) of said fuselage (2).

2. Hybrid helicopter according to Claim 1,
**characterised in that** the centre of lift of an assembly of half-wings (21, 22)/stabiliser surface (50) coincides with the centre of lift of said main rotor (10).

3. Hybrid helicopter according to either one of the preceding claims,
**characterised in that** said stabiliser surface (50) is provided with a first and a second stabiliser element (51, 52) extending on either side of the fuselage (2) at its front end (3).

4. Hybrid helicopter according to any one of the preceding claims,
**characterised in that** said stabiliser surface (50) includes at least one horizontal flap (53, 54).

5. Hybrid helicopter according to any one of the preceding claims,
**characterised in that** said stabiliser surface (50) is arranged outside the flow passing through said main rotor (10), a first distance (D1) separating said stabiliser surface (50) from said rotor mast (12) being greater than or equal to the length (L) of said blades (11).

6. Hybrid helicopter according to any one of the preceding claims,
**characterised in that** said stabiliser surface (50) is contained in a first plane (P1) and the additional lift surface (20) is contained in a second plane (P2), said first plane (P1) presenting a third angle (A3) relative to said second plane (P2) in such a manner that the stabiliser surface (50) possesses an angle of incidence greater than the additional lift surface (20) relative to the relative air flow.

7. Hybrid helicopter according to any one of the preceding claims,
**characterised in that** each end zone (21', 22') of said half-wings (21, 22) of the additional lift surface (20) is provided with a vertical element (23, 24).

8. Hybrid helicopter according to Claim 7,
**characterised in that** each vertical element (23, 24) is fitted with a rudder (23', 24').

9. Hybrid helicopter according to either one of Claims 7 and 8,
**characterised in that** said vertical elements (23, 24) present a first obtuse angle (A1) with the corresponding half-wing (21, 22), these vertical elements (23, 24) forming a negative dihedral directed towards the ground (S) when the hybrid helicopter (1) is on the ground.

10. Hybrid helicopter according to any one of the preceding claims,
**characterised in that** said half-wings (21, 22) are swept back so as to present a second angle (A2) with the fuselage (2) and so as to be directed towards the rear end (4) of the fuselage (2).

11. Hybrid helicopter according to any one of the preceding claims,
**characterised in that** said propellers (31, 32) are in pusher mode, each propeller (31, 32) being on the side of the trailing edge (21", 22") of the corresponding half-wing (21, 22).

12. Hybrid helicopter according to any one of the preceding claims,
**characterised in that** each propeller (31, 32) is arranged at the end zone (21', 22') of the corresponding half-wing (21, 22).

13. Hybrid helicopter according to any one of the preceding claims,
**characterised in that** each vertical element (23, 24) is provided with a support element (25) for supporting the hybrid helicopter (1) relative to the ground.

14. Hybrid helicopter according to any one of the preceding claims,
**characterised in that** the output rotational speeds of said at least one turbine engine (61, 62), of at least one of said propellers (31, 32), of said main rotor (10), and of said mechanical interconnection system (40) are mutually proportional, the proportionality ratio being constant regardless of the flying configuration of the hybrid helicopter (1) under normal conditions of operation.

## Patentansprüche

1. Hybridhelikopter (1) mit einem zentralen Rumpf (2) mit einem Vorderende (3) und einem hinteren Ende (4), wobei der Hybridhelikopter (1) aufweist:
- einen Hauptauftriebsrotor (10) mit einer Mehrzahl von Rotorblättern (11), der oberhalb des Rumpfes angeordnet ist,
- eine Zusatz-Auftriebsfläche (20) mit ersten und zweiten Halbflügeln (21, 22), die sich zu beiden Seiten des Rumpfes (2) erstrecken ausgehend von einem Flügelwurzelbereich (28, 29) bis zu einem Endbereich (21', 22'), wobei jeder Halbflügel (21, 22) mit einem Propeller (31, 32) versehen ist,
- ein mechanisches Verbindungssystem (40) zwischen dem Hauptrotor (10) und den Propellern (31, 32),
- mindestens einen Turbomotor (61, 62), der den Hauptrotor (10) und die Propeller (31, 32) ständig antreibt, indem der mit dem mechanischen System in Eingriff steht, wobei der Hauptrotor (10) mechanisch mit dem mechanischen Verbindungssystem (40) über eine sich drehende Rotorwelle (12) verbunden ist, **dadurch gekennzeichnet, dass** die Zusatz-Auftriebsfläche (20) am hinteren Teil des Hybridhelikopters (1) zwischen der Motorwelle (12) und dem hinteren Ende (4) des Rumpfes (2) angeordnet ist, und **dadurch** dass der Hybridhelikopter (1) mit einer Stabilisierungsfläche (50) versehen ist, die am vorderen Ende (3) des Rumpfes (2) angeordnet ist.

2. Hybridhelikopter nach Anspruch 1,
**dadurch gekennzeichnet, dass** das Auftriebszentrum der Gesamtheit bestehend aus den Halbflügeln (21, 22) und der Stabilisierungsfläche (50) mit dem Auftriebszentrum des Hauptrotors (10) zusammenfällt.

3. Hybridhelikopter nach einem der vorstehenden Ansprüche,
**dadurch gekennzeichnet, dass** die Stabilisierungsfläche (50) mit einem ersten und einem zweiten Stabilisierungselement (51, 52) versehen ist, die sich zu beiden Seiten des Rumpfes (2) an dessen vorderem Ende (3) erstrecken.

4. Hybridhelikopter nach einem der vorstehenden Ansprüche,
**dadurch gekennzeichnet, dass** die Stabilisierungsfläche (50) mindestens eine horizontale Klappe (53, 54) aufweist.

5. Hybridhelikopter nach einem der vorstehenden Ansprüche,
**dadurch gekennzeichnet, dass** die Stabilisierungsfläche (50) außerhalb der Strömung angeordnet ist, die den Hauptrotor (10) durchquert, wobei ein erster Abstand (D1), der die Stabilisierungsfläche (50) von der Rotorwelle (12) trennt größer oder gleich der Länge (L) der Rotorblätter (11) ist.

6. Hybridhelikopter nach einem der vorstehenden Ansprüche,
**dadurch gekennzeichnet, dass** die Stabilisierungsfläche (50) in einer ersten Ebene (P1) liegt, und die Zusatz-Auftriebsfläche (20) in einer zweiten Ebene (P2) liegt, wobei die erste Ebene (P1) eine dritte Winkelausrichtung (A3) bezüglich der zweiten Ebene (P2) aufweist, derart, dass die Stabilisierungsfläche (50) einen größeren Neigungswinkel gegenüber dem relativen Wind aufweist als die Zusatz-Auftriebsfläche (20).

7. Hybridhelikopter nach einem der vorstehenden Ansprüche,
**dadurch gekennzeichnet, dass** jeder Endbereich (21', 22') der Halbflügel (21, 22) der Zusatz-Auflriebsfläche (20) mit einem vertikalen Element (23, 24) versehen ist.

8. Hybridhelikopter nach Anspruch 7,
**dadurch gekennzeichnet, dass** jedes vertikale Element (23, 24) mit einem Seitenruder (23', 24') versehen ist.

9. Hybridhelikopter nach einem der Ansprüche 7 oder 8,
**dadurch gekennzeichnet, dass** die vertikalen Elemente (23, 24) mit einem stumpfen Winkel (A1) zu dem zugehörigen Halbflügel (21, 22) ausgerichtet sind, wobei die vertikalen Elemente (23, 24) einen negativen Flächenwinkel bilden, indem sie zum Boden (S) ausgerichtet sind, während der Hybridhelikopter (1) sich am Boden befindet.

10. Hybridhelikopter nach einem der vorstehenden Ansprüche,
**dadurch gekennzeichnet, dass** die Halbflügel (21, 22) positiv gepfeilt sind, wobei sie einen zweiten Winkel (A2) mit dem Rumpf (2) einnehmen und zum hinteren Ende (4) des Rumpfes (2) ausgerichtet sind.

11. Hybridhelikopter nach einem der vorstehenden Ansprüche,
**dadurch gekennzeichnet, dass** die Propeller (31, 32) sich im Vortriebsmodus befinden und j eder Propeller (31, 32) sich auf der Seite der Hinterkante (21", 22") des entsprechenden Halbflügels (21, 22) befindet.

12. Hybridhelikopter nach einem der vorstehenden Ansprüche,
**dadurch gekennzeichnet, dass** jeder Propeller (31, 32) im Endbereich (21', 22') des zugehörigen Halbflügels (21, 22) angeordnet ist.

13. Hybridhelikopter nach einem der vorstehenden Ansprüche,
**dadurch gekennzeichnet, dass** jedes vertikale Element (23, 24) mit einem Stützelement (25) des Hybridhelikopters (1) zum Abstützen auf dem Boden versehen ist.

14. Hybridhelikopter nach einem der vorstehenden Ansprüche,
**dadurch gekennzeichnet, dass** die Ausgangsdrehgeschwindigkeiten des mindestens einen Turbomotors (61, 62), mindestens eines der Propeller (31, 32), des Hauptrotors (10) und des mechanischen Verbindungssystems (40) untereinander proportional sind, wobei das Proportionalitätsverhältnis konstant ist unter normalen Betriebsbedingungen, unabhängig davon, in welchem Flugzustand sich der Hybridhelikopter (1) befindet.
